# EUROPEAN PATENT APPLICATION

(11) **EP 2 077 196 A1**
(43) Date of publication of application: **08.07.2009**
(21) Application number: 07023868.8
(22) Date of filing: 10.12.2007
(51) Int. Cl.: B60C 23/06

(54) **Method for monitoring the gas pressure of a vehicle tyre**

(71) Applicant: Continental Teves AG & Co. oHG, 60488 Frankfurt am Main (DE); PEUGEOT CITROËN AUTOMOBILES S.A., 78140 Vélizy Villacoublay (FR)
(72) Inventor: Fischer, Daniel, Dr., 65824 Schwalbach (DE); Griesser, Martin, Dr., 65760 Eschborn (DE); Köbe, Andreas, Dr., 64625 Bensheim (DE); Djama, Zahir, 75015 Paris (DE)
(74) Representative: Tergau & Pohl Patentanwälte

(57) **Abstract**

A method for monitoring the gas pressure of a vehicle tire, wherein the spectral distribution of the vertical acceleration of the vehicle tire is determined within a specifiable frequency band and a resonant frequency (Ω0) is determined therefrom, shall enable a particularly high reliability of the generation of warning messages, avoiding to a great extent unnecessarily generated error messages, even under varying roadway conditions and even in case of slowly or creepingly changing vehicle or component states. For this purpose, according to the invention, a warning message will be generated if the pair of values obtained from the resonant frequency (Ω0) and the amplitude (A) of the vertical acceleration determined for said resonant frequency lies outside a specified tolerance band around a stored nominal characteristic curve of resonant frequency and amplitude (14).

## Description

The invention relates to a method for monitoring the gas pressure or air pressure of a vehicle tire, wherein the spectral distribution of the vertical acceleration of the vehicle tire is determined within a specifiable frequency band and a resonant frequency is determined therefrom.

In modern systems for vehicle control or monitoring, usually a multitude of parameters or other information are made available to the driver to make the operation of the vehicle easier for him. Among others, it is usual to monitor the air pressure in the vehicle tires and, for enhanced system safety, to output a warning message to the driver when the air pressure considerably decreases or drops below specified safety thresholds, so that countermeasures can be taken in a suitable way and without impairing the operational safety.

In such systems, the gas or air pressure in the vehicle tires can be determined directly, for example by means of suitably fixed air pressure sensors, and centrally processed. Alternatively and in a simplified manner, this is, however, also possible by determining the air pressure in the vehicle tires indirectly through an analysis of the vertical acceleration behaviour of the respective vehicle tire, in particular as suitable acceleration sensors for determining the vertical acceleration mostly exist anyhow. Such an indirect determination of the air pressure in the vehicle tire is based on the knowledge that the wheel system as a whole can be considered as a dynamic system of spring-mounted masses stochastically excited by the unevennesses of the roadway, whereby the acceleration spectrum resulting as a consequence of the excitation through the unevennesses of the road can be considered as a superposition of different spring systems. In this spring system, the direct spring suspension of the vehicle, the associated shock absorbers, possibly the bearing of the mechanical components and the like, on the one hand, but also the vehicle tire as such, on the other hand, contribute to the spring behaviour, the spring behaviour of the vehicle tire being substantially determined by the vertical stiffness of the tire, which in turn substantially depends on the air pressure in the tire. Through a specific evaluation of the share of the spring behaviour allotted to the respective vehicle tire, one can, therefore, conclude to the air pressure.

To evaluate the vertical acceleration and to determine the air pressure, one usually profits from the knowledge to be taken, for example, from DE 29 05 931 C3, that each of the different components of the spring-mounted wheel dominates the behaviour of the entire system in a different frequency range. When analysing the frequency spectrum of the determined vertical acceleration, a resonant frequency allocated to the tire and through the latter, a conclusion to the tire stiffness can be obtained by selecting a suitable frequency band allocated to the tire behaviour. From a resonant frequency allocated to the tire, obtained in such a way, one can, therefore, determine a characteristic value for the air pressure in the tire. From EP 0 578 826 A1, a system is known in which suitable characteristic values for the air pressure can be obtained in the above-mentioned manner, taking the determined frequency spectrum of the vertical acceleration as a basis.

However, for reliably monitoring the air pressure and in particular for a reliable warning strategy adapted to practice, with which a warning signal is reliably generated for the driver in case of an actual pressure loss, whereby, on the other hand, unnecessary false messages shall be avoided to a large extent, a relatively precise determination of the air pressure behaviour of the respective tire is required. To provide in a flexible manner a relatively precise analysis of the air pressure based on the available acceleration data, a system is known from DE 198 03 386 A1, in which, using a trainable estimating unit or a neural network and using a direct air-pressure sensor as a reference in a learning or training phase, the spectral vertical acceleration behaviour of the individual vehicle tire is recorded and correlated with the air-pressure actual values determined as reference values. In a later utilisation phase, one can then determine the spectral behaviour of the respective vehicle tire, using the experimental values obtained in this way, and by means of this, one can conclude to the air pressure in the respective tire.

Nevertheless, even a system designed in this way is exposed to a relatively high number of possible error influences, which even after the learning or training phase of the trainable estimating unit may lead to disturbing influences and, therefore, to serious adulterations of the determined diagnostic statements. For example, the system on which the excitation of the acceleration is based, namely the roadway, may have varying properties, in particular varying unevennesses or the like, changes in the condition of the roadway immediately leading to changes of the determined acceleration spectrum. In order to suitably master the changes in the acceleration spectrum caused by the system, occurring due to this, and to avoid false diagnostics or false messages caused by varying conditions of the roadway, a deactivation of the air-pressure determination through the trainable estimating unit is provided as an additional safety measure in the system according to DE 198 03 386 A1 for the case that changes or states in the unevenness of the roadway occur which are considered as unacceptable. Thus, the trainable estimating unit or the neural network will only be used for determining air-pressure characteristic values if, regarding the detected unevenness or state of the roadway, a sufficient stability of suitable roadway states can be assumed.

However, even with a system protected in this way, a multitude of disturbing effects or disturbing variables may occur, which on a short-term or a medium-term or also a long-term basis may lead to an adulteration of the determined air-pressure characteristic values and the diagnostic statements obtained therefrom. For example, temperature effects, effects of the vehicle speed, vehicle load, weather conditions, but also in particular symptoms of ageing or wear of the components involved, may lead to an adulteration of the determined measuring results. In particular, symptoms of ageing or fatigue in the spring-mounted system, i.e. for example directly in the shock absorber or also in the area of its bearing on the vehicle, for example on the spring-stud bearing, may lead to changes of the respective spectral contributions in the determined acceleration spectrum, which may directly result in errors of evaluation and determination of the air pressure.

Therefore, it is an objective of the invention to provide a method for monitoring the gas pressure of a vehicle tire of the above-mentioned type, which enables a particularly high reliability of the generation of warning messages, avoiding to a great extent unnecessarily generated error messages, even under varying roadway conditions and even in case of slowly or creepingly changing vehicle or component states.

This objective is achieved by the invention by generating a warning message by means of the resonant frequency determined by means of the spectral distribution of the vertical acceleration, said warning message being possibly forwarded to the driver or made available for a downstream evaluation, if the pair of values obtained from the resonant frequency and the amplitude of the vertical acceleration determined for said resonant frequency lies outside a specified tolerance band around a stored nominal characteristic curve of resonant frequency and amplitude.

The invention is based on the consideration that for a warning strategy or generation of error messages which is particularly reliable and adapted to the actual tire condition, the influence of possible disturbing effects should be kept particularly low. To achieve this, one should make use, on the one hand, of the knowledge that a successful warning strategy which is oriented according to the actual requirements, does not necessarily require the determination of a quantitative characteristic value of the tire air pressure, which might be affected itself by errors and sources of disturbance. Rather can reliable warning messages be generated already within the framework of a pre-information, by directly using the variable which is immediately accessible from the frequency spectrum of the vertical acceleration, namely the resonant frequency allocated to the vehicle tire, whereby a determination of a quantitative value of the air pressure and a comparison of this value with a reference value which is considered as acceptable, is not considered as necessary. However, in order to furthermore improve also the quality of the determined statement even more, the effects related to the air pressure or to changes of the air pressure should be filtered out of such a spectrum in a suitable manner and should be, if possible, separated from other disturbing effects influencing the spectrum. This can be achieved by consistently taking into consideration, in addition to the determined resonant frequency, another parameter of the frequency spectrum, namely the amplitude of vertical acceleration measured for the determined resonant frequency.

It has namely turned out that for otherwise constant system parameters and for an actually constant air pressure in the tire, the resonant frequency determined in the frequency spectrum of the vertical acceleration may, in fact, vary as a function of possible disturbing variables, roadway properties, temperature effects or the like, this variation of the resonant frequency being accompanied, however, by a system-dependent corresponding change of the respective observed allocated amplitude in the frequency spectrum. A reliable determination whether a possible deviation of the determined resonant frequency is due to the changed air pressure in the tire or to other sources, is, therefore, possible by determining whether or not the observed resonant frequency matches a correspondingly stored expected value with regard to the amplitude determined for said resonant frequency. To take this fact into account, it is provided to base the determination of a pressure loss in the tire on the pair of values determined from the resonant frequency and the amplitude allocated to it instead of a single characteristic value. For this purpose, a nominal characteristic curve of resonant frequency and amplitude corresponding to a nominal range is suitably stored, the output of a warning message being provided for the case that the pair of values determined from the resonant frequency and the amplitude allocated to it lies outside a tolerance band around this nominal characteristic curve.

This concept is based on the surprising finding that with an actually constant air pressure in the tire, the resonant frequency actually allocated to the tire may in fact vary in the frequency spectrum as a function of the respective stochastic excitation or also as a function of the other system state, this variation being accompanied, however, by a correlated variation of the amplitude. A purposeful utilisation of this relation, whose contents are based on a model description of the entire system with constant air pressure, is possible in a particularly simple and efficient manner by determining in an advantageous development the nominal characteristic curve of resonant frequency and amplitude taken as a reference characteristic curve at a known air pressure which is kept constant, whereby, due to the model character, the determination of a number of pairs of values of the observed resonant frequency and the allocated amplitude is considered as sufficient for a reliable determination of this characteristic curve. Therefore, to store the above-mentioned nominal characteristic curve, advantageously a plurality of pairs of reference values are determined or measured from resonant frequencies and allocated amplitudes, whereby the nominal characteristic curve property speaking can be determined by means of these pairs of values through a suitable interpolation or estimation method. For example, the nominal characteristic curve can for this purpose be determined approximatively by means of the pairs of values, by determining a suitable number of polynomial coefficients or the like, it being possible to store the nominal characteristic curve determined in this way for the subsequent evaluation in the form of its polynomial coefficients in a suitable storage area.

The tolerance band or the tolerance range around the stored nominal characteristic curve, within which the determined pair of values for the resonant frequency and the amplitude allocated to it is considered as still being acceptable, so that no warning message is output, can have, in an advantageous embodiment, a fixedly specified frequency width, so that an exceeding of the respective limiting values observed in the frequency range will trigger an alarm message independently of the amplitude. That means that in such an embodiment, the warning strategy depends in particular on the behaviour of the respective vehicle tire as such, i. e. independently of other components.

In an alternative advantageous embodiment, the width of the tolerance band, i. e. the frequency interval considered as admissible, can, however, also be tracked in a variable and dynamic manner and can be made dependent in particular on other permanently determined characteristic variables in the motor vehicle. A possible warning strategy consists in this case in particular in evaluating the deviation of a tire behaviour in relation, or with reference, to the behaviour of other vehicle tires. Thus, in such a warning strategy, in an advantageous embodiment, the tolerance band is specified as a function of resonant frequencies determined for other vehicle tires of the same motor vehicle.

In a particular advantageous embodiment, the nominal characteristic curve of resonant frequency and amplitude is learned by a trainable estimating unit. Contrary to other systems based on the utilisation of trainable estimating units, such as, for example, neural networks, learning is not effected in this case with reference to air-pressure characteristic values provided as reference values by an allocated direct sensor in a learning phase, but the use of the trainable estimating unit it for determining the nominal characteristic curve of resonant frequency and amplitude enables an evaluation of the current system behaviour which is particularly well adapted to requirements and states and a correspondingly adapted output of warning messages exclusively on the basis of an observable change of the system behaviour, without having to determine or to take into account for this purpose, directly or indirectly, the actual air pressure in the tire as a characteristic variable. Thus, on the one hand, a relatively exact diagnostic utilisation of the determined values for a correct output of warning messages is possible, without having to take into account the sources of disturbance which might be relevant through the determination of the actual air pressure.

On the other hand, however, it is in this way also possible to effect the learning of the trainable estimating unit using exclusively parameters which are characteristic for the system behaviour and using in particular a continuous recording of the frequency spectra of the vertical-acceleration sensor carried out in a learning phase, whereby it is not necessary during the learning phase to take into account or refer to air-pressure actual values determined otherwise. The learning of the trainable estimating unit can, therefore, be occasioned in a flexible and requirement-adapted manner, the learning being also possible in situations in which other air-pressure sensors or the like are not available. This makes it in particular possible to occasion a learning phase of the trainable estimating unit even during operation of the vehicle, i. e. by the driver himself.

In this way, it is in particular possible to effect a correct evaluation of the measured value of vertical acceleration even after a relatively long operating time of the vehicle, a new learning phase of the trainable estimating unit being effected at intervals specifiable by the driver or else fixed as standard. Should, therefore, the system behaviour have changed during the preceding operation of the motor vehicle due to symptoms of fatigue of other components, such as, for example, spring-stud bearings or the like, it will be possible, through a newly occasioned learning, to newly pick up the system state and in particular the nominal characteristic curve of resonant frequency and amplitude necessary for the evaluation of an air-pressure loss in a way adapted to the current system parameters.

The only prerequisite for creating a new, updated nominal characteristic curve of resonant frequency and amplitude by a corresponding detection of at least one number of pairs of values of resonant frequency and amplitude used as nodes and by corresponding training or learning of the trainable estimating unit is in this case that the operator or driver verifies that the correct air pressure exists in the respective vehicle tire. If this is the case, the learning process can be initiated and, thus, the number of nodes or pairs of values of the nominal characteristic curve of resonant frequency and amplitude can be determined, which can then be stored in a suitably approximated form, for example by indicating corresponding polynomial coefficients, in a storing unit. By taking into account this characteristic curve in the future evaluation of the determined pairs of values of resonant frequency and amplitude, it can, therefore, reliably be concluded whether the air pressure, starting out from the air pressure recognised before as appropriate, has changed in a way exceeding a degree recognised as admissible. In this way, a reliable output of warning messages is possible even in cases where the system behaviour as a whole has changed due to symptoms of ageing or wear, or where, as a consequence of repair or replacement measures other system components are used than had originally been provided, such as, for example, after the exchange of a wheel through other rim or tire components.

The learning phase can be initiated, in a way adapted to the requirements, by the driver, for example after a recognisable system change, such as, for example, the mounting of a new set of wheels or the like, manually or else automatedly, for example controlled by specified events, and can be carried out during a fixedly specified or else a variable period of time. This can, for example for the duration of the learning phase, be based on the fact that the learning phase is carried out under specified conditions as long as possible, for example for about half an hour, and that during this time, the frequency spectrum of the vertical acceleration is continuously picked up, so that by means of the plurality of spectra obtained in this way, the above-mentioned node values can be determined. If necessary, i. e. if it is realised, for example, that the necessary stability of the external conditions is no longer given, the learning phase can, however, also be stopped prematurely, expediently recording and storing the time during which the learning phase has been carried out.

Assuming that a longer learning phase will provide evaluation results and, therefore, node values of higher quality, a characteristic value acquired in this way for the time during which the learning phase was carried out can be used for suitably adapting the tolerance range specified for the warning strategy for the future output of warning messages. This is based on the consideration that a relatively reliable nominal characteristic curve, i. e, a relatively long learning phase, enables an altogether more precise evaluation of the measured values, so that one can work with relatively small tolerance widths. For this purpose, the tolerance band is advantageously specified as a function of the time during which the learning phase effected before has been carried out.

The advantages achieved with the invention consist in particular in the fact that the utilisation of a pair of values composed of the resonant frequency on the one hand and the allocated amplitude of vertical acceleration on the other hand for a nominal/actual comparison, enables a particularly reliable warning strategy, avoiding to a great extent unnecessary false messages, when examining whether a warning message shall be output because of a change of the air pressure in the vehicle tire, which in particular does not require a direct determination and consideration of the air pressure. By taking into account the systematic relation between the determined resonant frequency and the allocated amplitude, the effect resulting from a change of the air pressure can be extracted from the system behaviour as a whole and thus be recognised in a relatively reliable way. The utilisation of a trainable estimating unit for determining the nominal characteristic curve of resonant frequency and amplitude according to the requirements makes it, furthermore, possible to update this characteristic curve in a relatively simple way in a manner which is decentralised and also controllable or occasionable by the driver, without a proper system adjustment requiring the provision of explicit actual values, supplied by an independent source, concerning the air pressure.

An exemplary embodiment of the invention is explained in detail by means of a drawing, in which:
- Fig. 1: is a schematic view of a system for monitoring the gas pressure of a vehicle tire,
- Fig. 2: is a schematic view of a frequency spectrum of the vertical acceleration in a vehicle tire, and
- Fig. 3: is a number of time diagrams to illustrate a warning strategy.

Identical parts are marked with the same reference numbers in all figures.

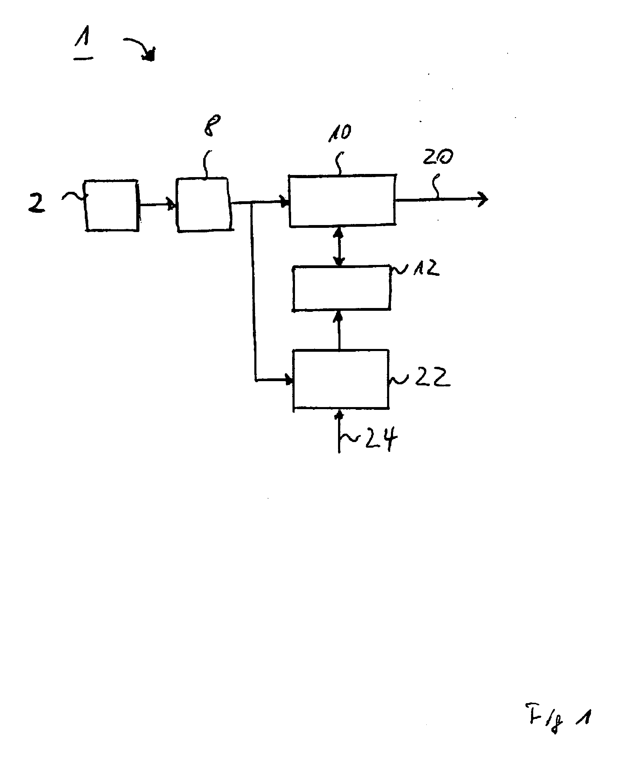

The system 1 according to Fig. 1 is provided for monitoring the gas or air pressure of a vehicle tire in a motor vehicle, which is not shown. It can in particular be part of a more comprehensive motor-vehicle operating system.

The system 1 is designed for monitoring the air pressure indirectly, i. e. using the analysis of a frequency spectrum of the vertical acceleration of the respective vehicle tire. For this purpose, the system 1 comprises a vertical-acceleration sensor 2 arranged in the vehicle tire, which continually outputs measured data on the current vertical acceleration of the respective vehicle tire. Namely, as a consequence of the stochastic excitation through the road, in particular through unevennesses of the roadway, the respective vehicle tire continually experiences a vertical acceleration, the determined acceleration depending on the one hand on the excitation through the road and on the other hand on the reaction of the coupled system, i. e. of the tire on the one hand and of the motor vehicle coupled above it by means of the shock absorber and the downstream system on the other hand.

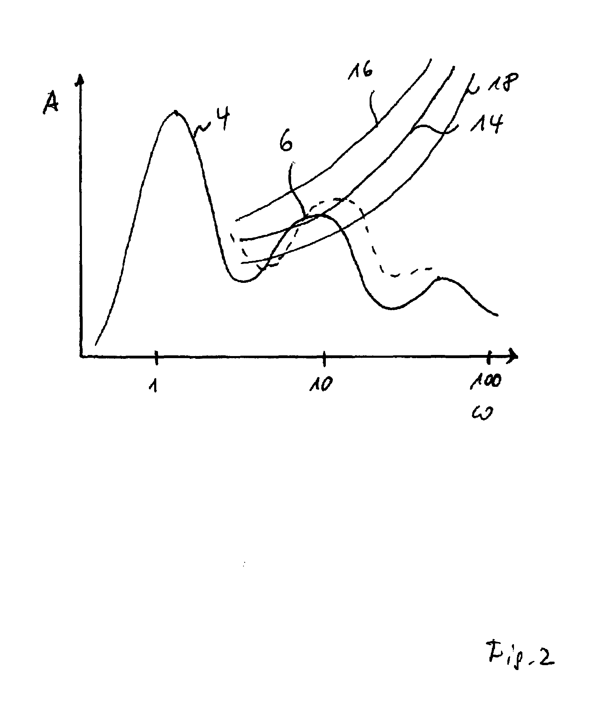

When stochastically excited through the road, such a system shows, as a function of the frequency, a spectrum like the one shown as an example in the diagram according to Fig. 2. In this diagram, the determined amplitude A of the vertical acceleration is shown as a function of the frequency Ω (in the figure shown in logarithmic representation). A typical dependency of the amplitude A on the frequency Q is represented in the diagram according to Fig. 2 by the curve 4. In the frequency area, this curve 4 has a number of maxima, which are due to the fundamental design of the entire system as an oscillating system of coupled spring elements. With regard to values usual for motor vehicles, such as spring constants, mass shares of the wheels and the like, it has turned out that the system share which is to be attributed to the stiffness of the tire and, therefore, to the air pressure in the tire, is usually reflected in a resonance in the range of approx. 10 Hz, resulting for the curve 4 in this frequency range in a maximum 6. In case of a pressure loss in the tire, this resonance is shifted towards lower frequencies, and the amplitude decreases. This is indicated in Fig. 2 by the dashed line.

For these reasons, usually the frequency range around approx. 10 Hz is evaluated for a utilisation of the frequency spectrum in connection with air-pressure monitoring. This is realised in the system 1 according to Fig. 1 by feeding the measured values furnished by the vertical-acceleration sensor 2 first of all to a band-pass filter 8, which forwards only the frequency shares lying in the above-mentioned frequency range. Downstream on the data side of the band-pass filter 8, a comparator unit 10 is connected, in which, by means of the incoming measured values of the vertical acceleration and by means of the frequency spectrum allocated to them, first of all the resonant frequency in the range of the maximum 6 shown in Fig. 2 as well as the amplitude values A allocated to this resonant frequency Ω0 are determined. Then, the comparator unit 10 accesses an allocated storage 12, in which a nominal characteristic curve 14 of resonant frequency and amplitude, which is also drawn in the diagram in Fig. 2, is suitably stored.

The nominal characteristic curve 14 of resonant frequency and amplitude takes into account the knowledge that - with constant air pressure in the tire -, due to external influences, such as, for example, varying roadway condition, temperature influences or the like, the resonant frequency determined from the frequency spectrum of the vertical acceleration may already vary due to these disturbing effects. With a constant air pressure, such a variation of the determined resonant frequency Ω0 is, however, accompanied by a correlated variation of the allocated amplitude of the vertical acceleration, this correlation being manifested in the nominal characteristic curve 14 of resonant frequency and amplitude. That means that, as long as it is observed for a resonant frequency Ω0 determined from the frequency spectrum that the value of the amplitude A of the vertical acceleration determined for this resonant frequency Ω0 corresponds with sufficient accuracy to the value represented by the above-mentioned characteristic curve, it can be assumed that the determined change in the resonant frequency Ω0 is not due to a change of the air pressure in the tire, but to a change of the other system properties or of the system excitation.

To specifically take into account this circumstance for an improved evaluation of the measuring results, the comparator unit 10 in the system according to Fig. 1 is designed for carrying out the nominal/actual comparison in relation to pairs of values of the determined resonant frequency Ω0 and the allocated amplitude A and not just in relation to individual parameters. For this purpose, the nominal characteristic curve of resonant frequency and amplitude in the comparator unit 10 is taken as a basis for carrying out such a comparison and is provided with an allocated tolerance band - represented in Fig. 2 by the limiting lines 16, 18. By the comparison it is checked whether or not the pair of values of the resonant frequency Ω0 and the amplitude A determined from the frequency spectrum of the vertical acceleration lies within the tolerance band surrounding the nominal characteristic curve of resonant frequency and amplitude. If this is not the case and the pair of values lies outside the tolerance range, the comparator unit 10, as symbolised by the arrow 20, will output a warning message to the driver or to a downstream evaluation system.

The nominal characteristic curve 14 of resonant frequency and amplitude represents as a model the system behaviour with constant air pressure in the tire. Accordingly, the nominal characteristic curve 14 of resonant frequency and amplitude can be obtained approximatively by determining, in the manner of nodes, a number of corresponding pairs of values by evaluating the system behaviour and by afterwards using them as a basis for an approximative determination of the characteristic curve. The approximative determination can be effected, for example, by determining the coefficients for a polynomial representation, whereby the coefficients determined in this way can suitably be stored in the storing unit 12. Thus, the nominal characteristic curve 14 of resonant frequency and amplitude is in this form suitably stored in the storing unit 12 in the form of its polynomial coefficients.

To provide the nominal characteristic curve 14 of resonant frequency and amplitude, possibly in the form of suitable polynomial coefficients, the system 1 according to Fig. 1 is provided with a trainable estimating unit 22, in particular a neural network. In a learning phase, which may possibly also be initiated by the driver, as indicated by the arrow 24, the input data from the vertical-acceleration sensor 2 transmitted by the band-pass filter 8 are transmitted to the trainable estimating unit 22. Provided that during the following training or learning time, the air pressure in the respective tire remains constant and thus corresponds to its nominal value, the trainable estimating unit 22 determines by continuously and repeatedly analysing the frequency spectrum of the vertical acceleration, in which way the amplitude of the vertical acceleration depends on the determined resonant frequency due to a possible change of other system parameters or else a change of the excitation due to variable road conditions. From the results obtained in this way, the parameters suitable for defining the nominal characteristic curve 14 of resonant frequency and amplitude, for example polynomial coefficients, are determined and stored in the storing unit 12.

In this way, it is made sure that the system 1 suitably recognises and learns the system behaviour automatically and in particular without explicit knowledge of the absolute value of the air pressure and only under the condition that the air pressure can currently by considered as correct and constant. This system behaviour, which is reflected in the determined nominal characteristic curve 14 of resonant frequency and amplitude, will later be used as a basis for judging whether in addition to system-immanent changes, further changes can be observed due to a change of the air pressure. Therefore, the comparison, provided afterwards, of the before-mentioned pairs of values with the above-mentioned nominal characteristic curve guarantees that exclusively system changes which exceed the system changes considered as normal and which must, therefore, be attributed to a change of the air pressure as an additional reason, will be considered as a basis for triggering a subsequent warning message.

The tolerance band around the nominal characteristic curve 14 of resonant frequency and amplitude, which in the evaluation is considered as the admissible range for the pair of values of resonant-frequency and amplitude, can have a fixed frequency width which can be defined, for example, in view of fixedly specified limiting value. In the exemplary embodiment it is, however, provided that in addition, further internal influences of the motor vehicle are taken into account for the specification of the tolerance band. On the one hand, the width of the tolerance band is specified as a function of resonant frequencies determined for other vehicle tires of the same motor vehicle, so that it can also be determined, among others, whether the resonant frequencies of different tires develop differently. Furthermore, the width of the tolerance band is specified as a function of the duration of the preceding learning operation, assuming more reliable measuring results for longer learning times and, therefore, specifying a relatively narrower tolerance band.

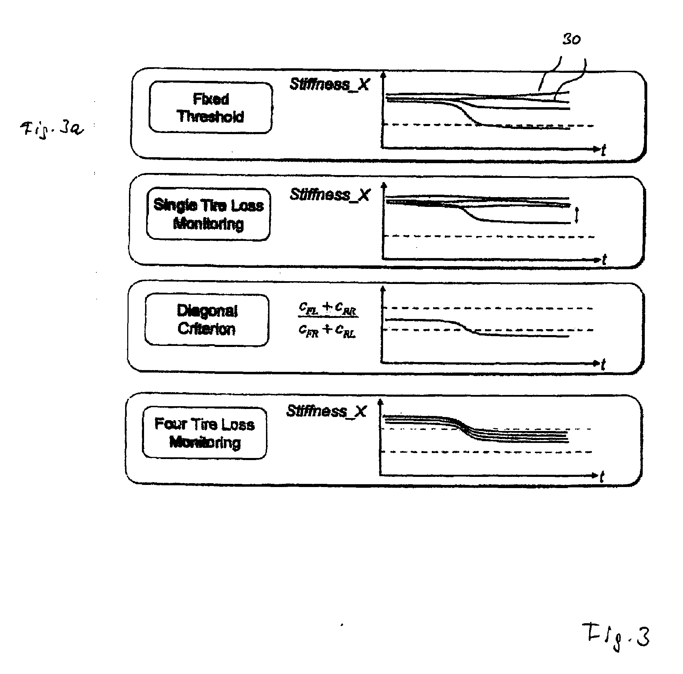

The output of the warning messages through the before-mentioned comparison based on the pair of values can be based on different warning strategies, which are schematically represented in the form of parameter/time diagrams in Fig. 3.

The variations in time represent in each case the monitoring variable already compensated by means of the characteristic curve 6, and the dashed line represents the recognition threshold and corresponds to line 18 of Fig. 2. In detail, the following warning strategies can, for example, be provided:

Fixed Thresholds: A fixed lower threshold is specified. Irrespective of the learning state, a warning will be output when the threshold is exceeded. Due to the differences between different tires, a warning can be output in this case at different pressures. Alternatively, the learned behaviour may also output a warning, for example if the current monitoring variable differs from the learned value by a fixed percentage ("Learned Threshold").

Single Tire Loss Monitoring: If the monitoring variable of one tire clearly differs from the monitoring variables of the other wheels, the warning will be output.

Diagonal Criterion: The indicated criterion is formed and a warning will be output if a fixed or learned value is fallen short of/exceeded.

Four Tire Loss Monitoring: A warning will be output if the monitoring variable of all four tires differs from the learned value. In this case, the fixed percentage can mostly be chosen smaller than in the case of the "Learned Threshold".

### List of reference numbers

- 1: system
- 2: vertical-acceleration sensor
- 4: curve
- 6: maximum
- 8: band-pass filter
- 10: comparator unit
- 12: storage / storing unit
- 14: nominal characteristic curve of resonant frequency and amplitude
- 16, 18: limit lines
- 20: arrow
- 22: trainable estimating unit
- 24: arrow
- 30: curves

- A: amplitude of vertical acceleration
- Q: frequency
- Ω0: resonant frequency

## Claims

1. Method for monitoring the gas pressure of a vehicle tire, wherein the spectral distribution of the vertical acceleration of the vehicle tire is determined within a specifiable frequency band and a resonant frequency (Ω0) is determined therefrom, a warning message being generated if the pair of values obtained from the resonant frequency (Ω0) and the amplitude (A) of the vertical acceleration determined for said resonant frequency lies outside a specified tolerance band around a stored nominal characteristic curve of resonant frequency and amplitude (14).

2. Method according to claim 1, wherein the nominal characteristic curve of resonant frequency and amplitude (14) is learned by means of a trainable estimating unit (22).

3. Method according to claim 1 or 2, wherein a number of pairs of values of resonant frequency and amplitude is determined for determining the nominal characteristic curve of resonant frequency and amplitude (14), by means of which the characteristic curve is approximated.

4. Method according to any of claims 1 to 3, wherein a fixed frequency width is specified for the tolerance band.

5. Method according to any of 1 to 4, wherein the tolerance band is specified as a function of resonant frequencies (Ω0) determined for other vehicle tires of the same motor vehicle.
